(19) **Europäisches Patentamt / European Patent Office / Office européen des brevets**

(11) **EP 4 072 944 B1**

(12) **FASCICULE DE BREVET EUROPEEN**

(45) Date de publication et mention de la délivrance du brevet:
**06.12.2023 Bulletin 2023/49**

(21) Numéro de dépôt: **20842719.5**

(22) Date de dépôt: **09.12.2020**

(51) Classification Internationale des Brevets (IPC):
**B64D 27/24** *(2006.01)* **B64D 31/12** *(2006.01)*
**B64C 11/00** *(2006.01)* **B64D 35/08** *(2006.01)*
**H02P 5/50** *(2016.01)* **H02P 5/747** *(2006.01)*

(52) Classification Coopérative des Brevets (CPC):
**B64D 31/12; B64D 27/24; H02P 5/50; H02P 5/747;**
B64C 11/00; B64D 35/08; Y02T 50/60

(86) Numéro de dépôt international:
**PCT/FR2020/052361**

(87) Numéro de publication internationale:
**WO 2021/116606 (17.06.2021 Gazette 2021/24)**

(54) **SYSTÈME ET PROCÉDÉ D'ÉQUILIBRAGE D'AU MOINS UN PARAMÈTRE À ÉQUILIBRER D'UN MOTEUR ÉLECTRIQUE D'UN SYSTÈME PROPULSIF**

SYSTEM UND VERFAHREN ZUM AUSWUCHTEN MINDESTENS EINES AUSZUWUCHTENDEN PARAMETERS EINES ELEKTRISCHEN MOTORS EINES ANTRIEBSSYSTEMS

SYSTEM AND METHOD FOR BALANCING AT LEAST ONE PARAMETER TO BE BALANCED OF AN ELECTRIC MOTOR OF A PROPULSION SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.12.2019 FR 1913963**

(43) Date de publication de la demande:
**19.10.2022 Bulletin 2022/42**

(73) Titulaire: **Safran Helicopter Engines**
**64510 Bordes (FR)**

(72) Inventeurs:
• **LEMAY, David**
**77550 Moissy-cramayel (FR)**
• **MARIN, Jean-Philippe Jacques**
**77550 Moissy-cramayel (FR)**

(74) Mandataire: **Casalonga**
**Casalonga & Partners**
**Bayerstraße 71/73**
**80335 München (DE)**

(56) Documents cités:
**CN-A- 108 216 646** **DE-A1-102016 220 234**
**DE-A1-102017 220 941** **DE-T5-112015 003 310**
**US-A1- 2013 231 208**

## Description

## Domaine technique de l'invention

La présente invention concerne le domaine des systèmes propulsifs d'aéronef, tels que notamment les systèmes propulsifs électriques ou hybrides d'aéronef.

## Etat de la technique antérieure

Un système propulsif électrique ou hybride d'aéronef comprend un organe propulsif configuré pour permettre et/ou participer à la propulsion et/ou la sustentation de l'aéronef et au moins deux moteurs électriques configurés pour entrainer la rotation de l'organe propulsif. L'organe propulsif peut être une hélice, par exemple carénée ou non carénée, une soufflante de turboréacteur ou plus généralement tout organe propulsif entraîné par au moins deux moteurs électriques.

Le nombre de moteurs électriques d'entraînement de l'hélice est souvent important afin de permettre la rotation de l'hélice et ainsi la propulsion et/ou la sustentation de l'aéronef en cas de panne d'un des moteurs électriques.

Les moteurs électriques peuvent être disposés en série sur un même arbre moteur ou par l'intermédiaire de systèmes d'accouplements mécaniques ou d'engrainement et sont, entièrement ou partiellement, cinématiquement liés en rotation à l'hélice. La vitesse de rotation des moteurs électriques est ainsi proportionnelle à la vitesse de rotation de l'hélice dans au moins un mode de fonctionnement.

Classiquement, chacun des moteurs électriques est commandé individuellement. Deux modes de commande peuvent être utilisés pour commander lesdits moteurs individuellement.

Selon un premier mode de commande, la vitesse de l'organe propulsif est directement commandée, de manière commune à l'ensemble des moteurs électriques. Les moteurs sont ainsi commandés suivant une seule boucle de régulation de vitesse directement sur la vitesse de l'hélice. Dans ce cas, la commande de vitesse dite globale de l'organe propulseur permet de calculer une consigne de commande en couple pour chaque moteur électrique. Chaque moteur électrique est ainsi commandé individuellement en termes de couple.

Selon un deuxième mode de commande, les moteurs peuvent être commandés en termes de couple suivant une boucle de régulation de couple propre à chaque moteur. Un tel mode de commande permet de garantir la sécurité de l'aéronef en cas de défaillance d'un des moteurs électriques.

Les systèmes de commande des moteurs en fonction de leur vitesse respective comprennent, pour chacun des moteurs électriques, une boucle de régulation autonome et indépendante des autres moteurs. Ainsi, la commande de la vitesse de l'hélice est robuste à la défaillance d'une des boucles de régulation et/ou d'un moteur électrique. Par ailleurs, en cas de désaccouplement de l'hélice, la commande de la vitesse des moteurs électriques est maintenue, ce qui facilite le ré-accouplement de l'hélice.

Toutefois, dans un tel système de commande de vitesse décentralisé, c'est-à-dire propre à chaque moteur électrique, on observe une disparité de la puissance fournie par chaque moteur. Cette disparité de puissance fournie est due principalement au fait que les moteurs ne sont pas configurés pour s'équilibrer naturellement et peut engendrer un échauffement significatif du moteur électrique fournissant la puissance la plus élevée, et ainsi une dégradation du moteur, voire une panne dudit moteur.

Le document DE 11 2015 003 310 T5 divulgue un aéronef motorisé et un procédé de détermination de la puissance et du nombre de moteurs électriques dans l'aéronef motorisé.

Il est de ce fait nécessaire d'équilibrer la puissance fournie des moteurs électriques entraînant un même arbre de rotation de l'hélice.

Dans le but d'équilibrer les moteurs électriques, il est connu d'établir une communication entres les moteurs électriques. Toutefois, le nombre de connexions nécessaires pour une telle communication est proportionnelle au nombre de moteurs, ce qui complexifie le système propulsif. De plus, il est particulièrement difficile de traiter les pannes d'une telle communication.

Ainsi, il existe un besoin d'équilibrer les moteurs électriques d'un système propulsif tout en améliorant l'indépendance entre les moteurs.

## Exposé de l'invention

La présente invention a donc pour but de pallier les inconvénients des systèmes précités et de proposer un système et un procédé d'équilibrage des moteurs électriques d'un système de propulsion d'aéronef sans aucune communication entre les différents moteurs électriques.

L'invention a donc pour objet un système d'équilibrage d'au moins un paramètre à équilibrer d'un moteur électrique d'un système propulsif, notamment d'aéronef, comprenant au moins deux moteurs électriques et un organe propulsif ou hélice entraîné en rotation par lesdits moteurs électriques.

On notera qu'il est préférable que le couple d'entraînement de l'organe propulsif soit monotone avec sa vitesse de rotation, ce qui est généralement le cas pour les organes propulsifs utilisés dans les aéronefs.

Le système d'équilibrage comprend un module d'équilibrage associé à un moteur électrique, chacun des modules d'équilibrage étant configuré pour calculer une correction de la consigne de vitesse en fonction d'un facteur de correction de la consigne de vitesse dépendant d'un paramètre du moteur électrique associé que l'on cherche à équilibrer et d'une consigne de vitesse de l'organe propulsif.

Ainsi, l'équilibrage est de ce fait propre à chaque moteur et utilise uniquement un ou plusieurs paramètres du moteur commandé.

On notera que l'invention n'est pas limitée au nombre de moteurs décrits en référence aux figures et pourrait être appliquée à N moteurs électriques, N étant un nombre entier supérieur à deux.

Le facteur de correction de la consigne de vitesse est, par exemple, une fonction affine monotone décroissante dépendant d'un gain d'équilibrage et d'une valeur maximale de correction de consigne prédéterminée.

Le gain d'équilibrage peut être déterminé en fonction d'une valeur maximale de l'erreur statique sur la vitesse de l'organe propulsif allouée à l'équilibrage des moteurs électriques, par exemple prédéterminée en fonction d'une consigne maximale de vitesse de rotation de l'organe propulsif, d'une valeur minimale de l'erreur statique sur la vitesse de l'organe propulsif allouée à l'équilibrage des moteurs électriques, par exemple prédéterminée en fonction d'une consigne minimale de vitesse de rotation de l'organe propulsif, et des valeurs maximales et minimales du paramètre à équilibrer.

Le gain d'équilibrage est déterminé de manière à réduire une erreur statique entre les paramètres des moteurs électriques que l'on cherche à équilibrer, et en conséquence sur la vitesse de l'organe propulsif.

Selon un mode de réalisation, le système d'équilibrage comprend un module de compensation de l'erreur statique sur la vitesse de l'organe propulsif configuré pour calculer une consigne de compensation de la consigne de vitesse de l'organe propulsif en fonction du paramètre à équilibrer du moteur associé.

Selon un autre mode de réalisation, le système d'équilibrage comprend un module de compensation de l'erreur statique sur la vitesse de l'organe propulsif configuré pour calculer une consigne de compensation de la consigne de vitesse de l'organe propulsif en fonction d'une valeur estimée de la charge de l'organe propulsif.

Le paramètre à équilibrer correspond, par exemple, au courant électrique dans le moteur électrique associé.

Le paramètre P à équilibrer correspond à une grandeur physique essentielle à la conception du moteur électrique et peut être choisi parmi la liste, non limitative, comprenant le couple délivré par le moteur électrique, le courant électrique dans le moteur électrique, le courant électrique consommé par l'électronique de puissance du moteur électrique, la puissance mécanique, la puissance électrique à un endroit de la chaîne propulsive, la température mesurée, par exemple sur le moteur électrique.

Par exemple, le système d'équilibrage comprend un filtre passe-bas en amont de chaque module d'équilibrage afin de filtrer le paramètre du moteur électrique associé que l'on cherche à équilibrer entrant dans le module d'équilibrage.

Selon un second aspect, l'invention concerne un système de commande comprenant un système d'équilibrage tel que décrit précédemment et un module de commande associé à un moteur électrique et configuré pour calculer et transmettre une commande de couple au moteur électrique associé en fonction de la vitesse de rotation du moteur électrique associé et de la consigne de vitesse calculée par le système d'équilibrage.

Avantageusement, le système de commande comprend deux unités de commande distinctes, chacune dédié à un moteur électrique, chacune des unités de commande comprenant au moins un module d'équilibrage et un module de commande.

Selon un autre aspect, l'invention concerne un système propulsif, notamment d'aéronef, comprenant au moins deux moteurs électriques montés sur un même arbre de rotation, un organe propulsif ou hélice entraîné en rotation par lesdits moteurs et un système de commande des moteurs électriques tel que décrit précédemment.

Selon un autre aspect, l'invention concerne un procédé d'équilibrage d'au moins un paramètre à équilibrer d'un moteur électrique d'un système propulsif, notamment d'aéronef, comprenant au moins deux moteurs électriques et un organe propulsif ou hélice entraîné en rotation par lesdits moteurs électriques, comprenant :

- une étape de calcul d'un facteur de correction d'une consigne de vitesse dépendant d'un paramètre du moteur électrique associé que l'on cherche à équilibrer, et

- une étape de calcul, pour chacun des moteurs électriques d'une correction de la consigne de vitesse en fonction du facteur de correction calculé et d'une consigne de vitesse de l'organe propulsif.

Avantageusement, pour calculer le facteur de correction de la consigne de vitesse, on calcule un gain d'équilibrage en fonction d'une valeur maximale de l'erreur statique sur la vitesse de l'organe propulsif allouée à l'équilibrage des moteurs électriques, par exemple prédéterminée en fonction d'une consigne maximale de vitesse de rotation de l'organe propulsif, d'une valeur minimale de l'erreur statique sur la vitesse de l'organe propulsif allouée à l'équilibrage des moteurs électriques, par exemple prédéterminée en fonction d'une consigne minimale de vitesse de rotation de l'organe propulsif, et des valeurs maximales et minimales du paramètre à équilibrer.

Selon un mode de réalisation, on calcule une consigne de compensation de la consigne de vitesse de l'organe propulsif en fonction du paramètre à équilibrer du moteur associé ou en fonction d'une valeur estimée de la charge de l'organe propulsif.

Selon un autre aspect, l'invention concerne un procédé de commande dans lequel on transmet à un module de commande associé à un moteur électrique la consigne de vitesse calculée à l'étape de calcul du procédé d'équilibrage tel que décrit précédemment, et on calcule une commande de couple en fonction de la vitesse de rotation du moteur électrique associé et de ladite consigne de vitesse.

Ainsi, le procédé de commande est configuré pour moduler une consigne de vitesse de chacun des moteurs en fonction du facteur de correction de la consigne de vitesse calculé par le procédé d'équilibrage.

**Brève description des dessins**

D'autres buts, caractéristiques et avantages de l'invention apparaîtront à la lecture de la description suivante, donnée uniquement à titre d'exemple non limitatif, et faite en référence aux dessins indexés sur lesquels :

[Fig 1] illustre schématiquement un système propulsif d'aéronef comprenant deux moteurs électriques et un système de commande desdits moteurs comportant un système d'équilibrage d'un paramètre desdits moteurs selon un premier mode de réalisation de l'invention ;

[Fig 2] est un graphique illustrant la correction de consigne de vitesse de rotation des moteurs du système propulsif en ordonnées en fonction d'un paramètre dudit système propulsif en abscisses ;

[Fig 3] représente un procédé de commande des moteurs électriques du système propulsif de la figure 1 comprenant un procédé d'équilibrage d'un paramètre desdits moteurs mis en oeuvre dans le système d'équilibrage de la figure 1 ;

[Fig 4] illustre schématiquement un système propulsif d'aéronef comprenant deux moteurs électriques et un système de commande desdits moteurs comportant un système d'équilibrage d'un paramètre desdits moteurs selon un deuxième mode de réalisation de l'invention ; et

[Fig 5] illustre schématiquement un système propulsif d'aéronef comprenant deux moteurs électriques et un système de commande desdits moteurs comportant un système d'équilibrage d'un paramètre desdits moteurs selon un troisième mode de réalisation de l'invention.

**Exposé détaillé d'au moins un mode de réalisation**

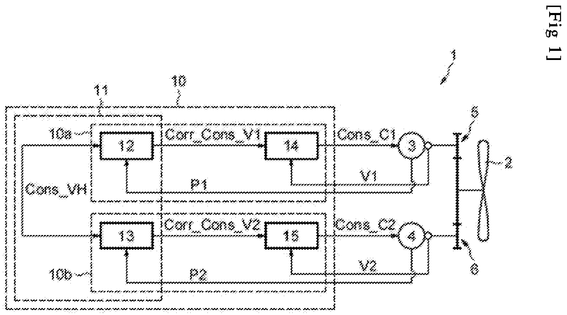

Sur la figure 1 est représenté très schématiquement un système propulsif d'aéronef 1 comprenant une hélice 2 configurée pour permettre et/ou participer à la propulsion et/ou la sustentation de l'aéronef et deux moteurs électriques 3, 4 configurés pour entrainer la rotation de l'hélice 2 par l'intermédiaire de dispositifs d'accouplement et/ou d'engrainement 5, 6. On notera que l'invention n'est pas limitée au nombre de moteurs décrits en référence aux figures et pourrait être appliquée à N moteurs électriques, N étant un nombre entier supérieur à deux.

Par ailleurs, que l'invention n'est pas limitée à la présence de dispositifs d'accouplement et/ou d'engrainement. Les moteurs électriques 3, 4 pourraient être directement disposés sur l'arbre de l'hélice 2.

On notera également que les moteurs 3, 4 peuvent être des équipements distincts, chacun composé d'un stator et d'un rotor, un seul organe moteur, composé de plusieurs bobinages statoriques polyphasés et d'un rotor commun, ou toute combinaison des éléments précédents.

Le système propulsif 1 comprend en outre un système de commande configuré pour calculer et transmettre une commande de couple Cons_C1, Cons_C2 à chacun des moteurs électriques 3, 4.

Le système de commande 10 comprend deux unités de commandes 10a, 10b distinctes, chacune dédié à un moteur électrique 3, 4. Chaque unité de commande héberge les fonctions d'équilibrage et de commande du moteur associé. L'unité électronique de commande peut également faire partie du moteur électrique lui-même. De tels moteurs sont dits « intelligents ».

En variante, on pourrait prévoir une seule unité électrique de commande pour les deux moteurs électriques.

Le système de commande 10 est configuré pour modifier la commande de couple de chaque moteur électrique 3, 4 en fonction d'un paramètre P du moteur électrique associé que l'on cherche à équilibrer, par exemple en fonction de la puissance délivrée par le moteur correspondant.

Le système de commande 10 comprend à cet effet un système d'équilibrage 11 configuré pour calculer une correction de la consigne de vitesse Corr_Cons_V1, Corr_Cons_V2 du moteur électrique associé 3, 4 en fonction d'un facteur de correction F1, F2 de la consigne de vitesse dépendant d'un paramètre P du moteur électrique associé que l'on cherche à équilibrer. L'équilibrage est de ce fait propre à chaque moteur et utilise uniquement un ou plusieurs paramètres du moteur commandé.

Le paramètre P à équilibrer correspond à une grandeur physique essentielle à la conception du moteur électrique et peut être choisi parmi la liste, non limitative, comprenant le couple délivré par le moteur électrique, le courant électrique dans le moteur électrique, le courant électrique consommé par l'électronique de puissance du moteur électrique, la puissance mécanique, la puissance électrique à endroit de la chaîne cinématique, la température mesurée, par exemple sur le moteur électrique.

Dans l'ensemble des exemples illustrés et décrits, le paramètre P à équilibrer correspond au courant électrique dans le moteur électrique. En effet, le courant électrique correspond au paramètre essentiel pour la conception du moteur électrique et, notamment de son électronique de puissance. L'équilibrage du courant électrique dans le moteur électrique permet d'optimiser la conception du moteur électrique et de réduire sa température. On notera que l'invention n'est pas limitée à l'utilisation du courant électrique dans le moteur comme paramètre à équilibrer et pourrait s'appliquer à n'importe quel paramètre à équilibrer tel que défini ci-dessus.

Tel qu'illustré, le système d'équilibrage 11 comprend un premier module 12 d'équilibrage associé au premier moteur électrique 3 et un deuxième module 13 d'équilibrage associé au deuxième moteur électrique 4.

Le premier module d'équilibrage 12 est configuré pour calculer une correction de la consigne de vitesse Corr_Cons_V1 en fonction d'une consigne de vitesse de l'hélice Cons_VH et d'un premier facteur correctif F1. Le premier facteur correctif F1 dépend du paramètre P1 à équilibrer, ici le courant électrique dans le premier moteur électrique 3. La consigne de vitesse Corr_Cons_V1 est ensuite transmise à un module de commande 14 de la vitesse V1 du premier moteur électrique 3 configuré pour calculer une consigne de couple Cons_C1 en fonction de la vitesse de rotation V1 du premier moteur électrique 3 et de la consigne de vitesse Corr_Cons_V1 calculée par le module 12 d'équilibrage.

De manière analogue, le deuxième module d'équilibrage 13 est configuré pour calculer une correction de la consigne de vitesse Corr_Cons_V2 en fonction d'une consigne de vitesse de l'hélice Cons_VH et d'un deuxième facteur correctif F2. Le deuxième facteur correctif F2 dépend du paramètre P2 à équilibrer, ici le courant électrique dans le deuxième moteur électrique 4. La consigne de vitesse Corr_Cons_V2 est ensuite transmise à un module de commande 15 de la vitesse V2 du deuxième moteur électrique 4 configuré pour calculer une commande de couple Cons_C2 en fonction de la vitesse de rotation V2 dudit deuxième moteur 4 et de la consigne de vitesse Corr_Cons_V2 calculée par le module 13 d'équilibrage.

Dans le cas d'un système propulsif 1 comprenant N moteurs électriques, chacun des modules d'équilibrage du moteur électrique associé est configuré pour calculer une correction de la consigne de vitesse Corr_Cons_VN selon l'équation suivante :

$$Corr\_Cons\_VN = Cons\_VH + F$$

Avec :
FN, une fonction affine monotone décroissante, s'écrivant selon l'équation suivante :

$$FN = Corr\_Cons\_Vmax + GN.PN$$

Avec :

GN, un gain d'équilibrage pour chaque moteur électrique ; et
Corr_Cons_Vmax, une valeur maximale de correction de consigne prédéterminée, correspondant à l'erreur statique maximale sur la consigne de vitesse de l'hélice que l'on s'autorise à générer pour assurer l'équilibrage des moteurs.

Le gain d'équilibrage GN est déterminé de manière à réduire une erreur statique E sur la vitesse de l'hélice 2. Cette erreur statique E est proportionnelle au paramètre du moteur à équilibrer, ici le courant électrique.

Le gain d'équilibrage GN s'écrit selon l'équation suivante :

$$GN = \frac{Emax - Emin}{PN(max) - PN(min)}$$

Avec :

Emax, la valeur maximale de l'erreur statique sur la vitesse de l'hélice allouée à l'équilibrage des moteurs électriques, prédéterminée en fonction d'une consigne maximale de vitesse de rotation de l'hélice ; ladite erreur statique maximale est imposée par le système de contrôle du vol de l'aéronef au système propulsif, elle dépend de la précision nécessaire au système de pilotage pour assurer un contrôle du vol stable, confortable pour le pilote et performant ;
Emin, la valeur minimale de l'erreur statique sur la vitesse de l'hélice allouée à l'équilibrage des moteurs électriques prédéterminée en fonction d'une consigne minimale de vitesse de rotation de l'hélice; de manière analogue à l'erreur statique maximale, ladite erreur statique minimale est imposée par le système de contrôle du vol de l'aéronef au système propulsif ;
PN(max), la valeur maximale du paramètre à équilibrer, ici la valeur maximale du courant admissible par le moteur électrique N ; et
PN(min), la valeur minimale du paramètre à équilibrer, ici la valeur minimale du courant électrique du moteur électrique N.

Un gain d'équilibrage GN trop important a pour conséquence de dégrader les marges de stabilité de la commande de la vitesse du moteur N, pouvant amener les moteurs électriques à osciller. Il est donc important de déterminer un gain d'équilibrage afin d'obtenir un compromis entre la qualité de l'équilibrage des moteurs électriques, l'erreur statique induite sur la vitesse de l'hélice et la robustesse de stabilité de l'ensemble de la commande des moteurs.

Pour remédier à cet inconvénient, le système de commande 10 peut comprendre un filtre passe-bas en amont de chaque module d'équilibrage afin de filtrer le paramètre P à équilibrer, ici le courant électrique, du moteur entrant dans le module d'équilibrage.

La première unité électronique de commande 10a comprend le premier module d'équilibrage 12 et le premier module de commande 14.

La deuxième unité électronique de commande 10b comprend le deuxième module d'équilibrage 13 et le deuxième module de commande 15.

Ainsi, le système de commande comprend deux unités de commande distinctes et dédiées à un moteur électrique.

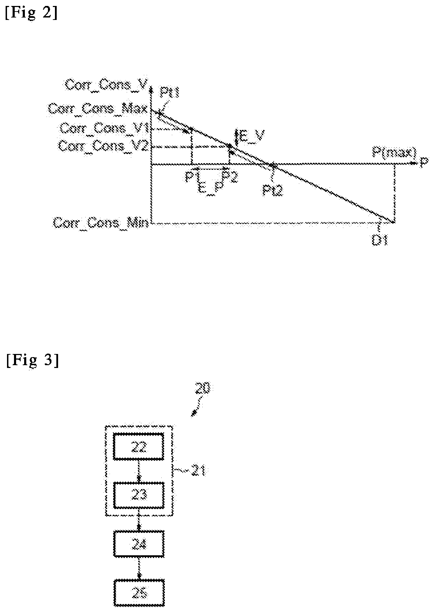

La figure 2 représente un graphique illustrant la correction de consigne de vitesse de rotation des moteurs électriques 3, 4 du système propulsif 1 en ordonnées en fonction du paramètre P1, P2 à équilibrer de chaque moteur 3, 4 en abscisses.

La droite D1 correspond à la droite d'équilibrage correspondant à la correction de la consigne de vitesse appliquée sur chaque moteur électrique en fonction du paramètre P à équilibrer, ici le courant électrique dans le moteur.

On a représenté sur ce graphique un exemple d'évolution des points de fonctionnement des moteurs électriques équilibrés selon le premier mode de réalisation présenté ci-dessus, afin de visualiser l'interaction entre la fonction d'équilibrage, le paramètre à équilibrer et la correction de la consigne de vitesse. Les points de fonctionnement Pt1 et Pt2 correspondent aux points de fonctionnement initiaux respectivement du premier et deuxième moteurs électriques 3, 4.

Dans l'exemple illustré, le premier moteur électrique 3 a initialement un courant faible, alors que le deuxième moteur électrique 4 a initialement un courant plus important que le courant du premier moteur.

Le module d'équilibrage 12 associé au premier moteur 3 est configuré pour corriger la consigne de vitesse dudit moteur de manière à augmenter son courant électrique.

A l'inverse, le module d'équilibrage 13 associé au deuxième moteur 4 est configuré pour corriger la consigne de vitesse dudit moteur de manière à réduire son courant électrique.

Ainsi, le système d'équilibrage 11 est configuré pour rapprocher les points de fonctionnement des moteurs électriques l'un vers l'autre. L'écart de courant résiduel E_P entre les moteurs électriques est proportionnel à l'erreur de mesure de vitesse E_V entre lesdits moteurs.

L'écart de courant est donc fortement réduit, sans pour autant s'annuler.

L'organigramme représenté sur la figure 3 illustre un exemple d'un procédé 20 de commande des moteurs électriques 3, 4 comprenant un procédé d'équilibrage 21 d'un paramètre desdits moteurs mis en oeuvre dans le système d'équilibrage de la figure 1.

Le procédé d'équilibrage 21 comprend une étape 22 de calcul d'un facteur de correction F1, F2 d'une consigne de vitesse dépendant d'un paramètre P1, P2 du moteur électrique associé que l'on cherche à équilibrer, et une étape 23 de calcul, pour chacun des moteurs électriques 3, 4, d'une correction de la consigne de vitesse Corr_Cons_V1, Corr_Cons_V2 en fonction d'un facteur de correction et d'une consigne de vitesse Cons_VH de l'hélice 2 selon les équations Math 1 à Math 3 ci-dessus.

Le procédé 20 de commande comprend en outre une étape 24 de transmission au module de commande 14, 15 associé à un des moteurs électriques 3, 4 de la consigne de vitesse Corr_Cons_V1, Corr_Cons_V2 calculée à l'étape 23 de calcul du procédé 21 d'équilibrage et une étape 25 de calcul d'une commande de couple Cons_C1, Cons_C2, ou directement des commandes de rapports cycliques PWM des moteurs, en fonction de la vitesse de rotation V1, V2 du moteur électrique associé 3, 4 et de ladite consigne de vitesse Corr_Cons_V1, Corr_Cons_V2.

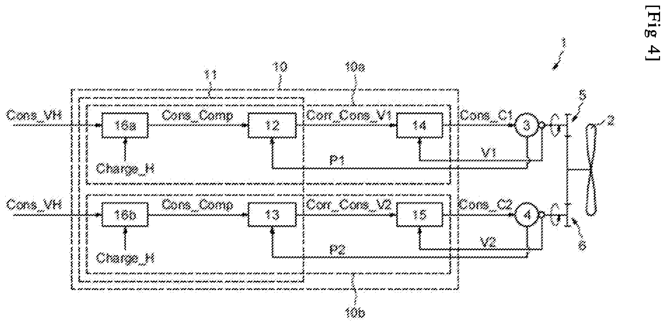

Le mode de réalisation illustré à la figure 4, dans lequel les mêmes éléments portent les mêmes références, diffère du mode de réalisation illustré à la figure 1 par l'intégration d'un module 16a, 16b de compensation de l'erreur statique dans chacune des unités de commande 10a, 10b.

Chacun des modules 16a, 16b de compensation de l'erreur statique est configuré pour calculer une consigne de compensation Cons_comp de la consigne de l'hélice 2 en fonction d'une valeur estimée Charge_H de la charge de l'hélice 2.

La valeur estimée Charge_H de la charge de l'hélice 2 est connue du constructeur de l'hélice, notamment à partir de cartographies en fonction du pas de l'hélice et de la vitesse de rotation de l'hélice.

La consigne de compensation Cons_comp de la consigne de l'hélice 2 est ensuite transmise à l'entrée de chacun des modules d'équilibrage 12, 13 du système d'équilibrage 11.

Chacun des modules 16a, 16b permet de compenser, en boucle ouverte, en partie l'erreur statique sur la vitesse de l'hélice.

Toutefois, l'estimation de la charge de l'hélice n'est pas une valeur certaine.

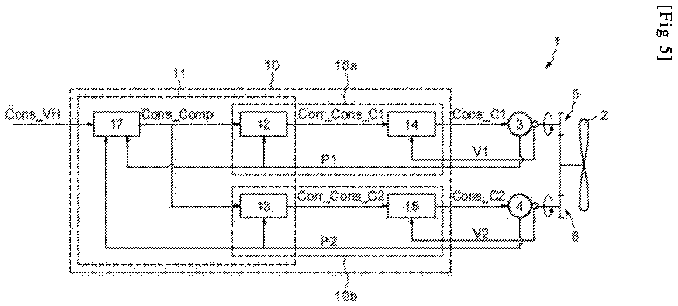

Le mode de réalisation illustré à la figure 5, dans lequel les mêmes éléments portent les mêmes références, diffère du mode de réalisation illustré à la figure 1 par l'intégration d'un module 17 de compensation de l'erreur statique dans le système de commande 10, en amont des unités de commande électroniques 10a, 10b dédiées à chacun des moteurs électriques. Par exemple, le module 17 de compensation de l'erreur statique peut être intégré dans une unité de commande configurée pour calculer la consigne de vitesse de l'hélice Cons_VH.

Le module 17 de compensation de l'erreur statique est configuré pour calculer une consigne de compensation Cons_comp de la consigne de l'hélice 2 en fonction du paramètre P à équilibrer, ici le courant électrique.

La consigne de compensation Cons_comp de la consigne de l'hélice 2 est ensuite transmise à l'entrée de chacun des modules d'équilibrage 12, 13 du système d'équilibrage 11.

Le module 17 permet de compenser, en boucle fermée, en totalité l'erreur statique sur la vitesse de l'hélice, sans communication entres les moteurs électriques.

Les modules 16 et 17 des deuxièmes et troisièmes modes de réalisation de l'invention permettent d'appliquer un ajustement de la consigne de vitesse inverse à celui réalisé par les modules d'équilibrage.

Grâce à l'invention, les moteurs électriques ne communiquent pas entre eux, mais communiquent avec l'unité électronique de commande 10a, 10b dédiée. Cette communication est déjà présente sur les systèmes propulsifs d'aéronef, de sorte que la solution proposée ne complexifie pas le système propulsif.

L'invention pourrait s'appliquer à tout système propulsif comprenant un organe propulsif et au moins deux moteurs électriques montés sur un même arbre de rotation de l'organe propulsif.

Le terme « hélice » plus particulièrement employé dans la description détaillée des figures englobe, de manière générale, tout organe propulsif entraîné par au moins deux moteurs électriques. En d'autres termes, l'organe propulsif peut être une hélice, par exemple de type hélice carénée ou non carénée ou encore une soufflante de turboréacteur.

## Revendications

1. Système (11) d'équilibrage d'un moteur électrique d'un système propulsif (1), notamment d'aéronef, par au moins un paramètre (P1, P2) comprenant au moins deux moteurs électriques (3, 4) et un organe propulsif (2) entraîné en rotation par lesdits moteurs électriques, **caractérisé en ce que** ledit système (11) d'équilibrage comprend un module d'équilibrage (12, 13) associé à chaque moteur électrique (3, 4), chacun des modules d'équilibrage (12, 13) étant configuré pour calculer une correction de la consigne de vitesse (Corr_Cons_V1, Corr_Cons_V2) en fonction d'un facteur de correction (F1, F2) de la consigne de vitesse dépendant dudit au moins un paramètre (P1, P2) du moteur électrique associé que l'on cherche à équilibrer et d'une consigne de vitesse (Cons_VH) de l'organe propulsif (2).

2. Système (11) d'équilibrage selon la revendication 1, dans lequel le facteur de correction (F1, F2) de la consigne de vitesse est une fonction affine monotone décroissante dépendant d'un gain d'équilibrage (GN) et d'une valeur maximale (Corr_Cons_Vmax) de correction de consigne de vitesse prédéterminée.

3. Système (11) d'équilibrage selon la revendication 2, dans lequel le gain d'équilibrage (GN) est déterminé en fonction d'une valeur maximale (Emax) de l'erreur statique sur la vitesse de l'organe propulsif (2) allouée à l'équilibrage des moteurs électriques, d'une valeur minimale (Emin) de l'erreur statique sur la vitesse de l'organe propulsif (2) allouée à l'équilibrage des moteurs électriques, et des valeurs maximales et minimales (PN(max) ; PN(min)) du paramètre à équilibrer (P).

4. Système (11) d'équilibrage selon l'une quelconque des revendications précédentes, comprenant un module (16a, 16b) de compensation de l'erreur statique (E) sur la vitesse de l'organe propulsif (2) configuré pour calculer une consigne de compensation (Cons_comp) de la consigne de vitesse (Cons_VH) de l'organe propulsif (2) en fonction d'une valeur estimée (Charge_H) de la charge de l'organe propulsif (2).

5. Système (11) d'équilibrage selon l'une quelconque des revendications 1 à 4, comprenant un module (17) de compensation de l'erreur statique (E) sur la vitesse de l'organe propulsif (2) configuré pour calculer une consigne de compensation (Cons_comp) de la consigne de vitesse (Cons_VH) de l'organe propulsif (2) en fonction du paramètre (P1, P2) à équilibrer du moteur associé.

6. Système (11) d'équilibrage selon l'une quelconque des revendications précédentes, dans lequel le paramètre (P1, P2) à équilibrer correspond au courant électrique dans le moteur électrique associé (3, 4).

7. Système (11) d'équilibrage selon l'une quelconque des revendications précédentes, comprenant un filtre passe-bas en amont de chaque module d'équilibrage afin de filtrer le paramètre (P1, P2) du moteur électrique associé que l'on cherche à équilibrer entrant dans le module d'équilibrage.

8. Système de commande (10) comprenant un système (11) d'équilibrage selon l'une quelconque des revendications précédentes et un module de commande (14, 15) associé à un moteur électrique (3, 4) et configuré pour calculer et transmettre une commande de couple (Cons_C1, Cons_C2) au moteur électrique associé (3, 4) en fonction de la vitesse de rotation (V1, V2) du moteur électrique associé (3, 4) et de la consigne de vitesse (Corr_Cons_V1, Corr_Cons_V2) calculée par le système (11) d'équilibrage.

9. Système de commande (10) selon la revendication 8, comprenant deux unités de commande (10a, 10b) distinctes, chacune dédié à un moteur électrique (3, 4), chacune des unités de commande (10a, 10b) comprenant au moins un module d'équilibrage (12, 13) et un module de commande (14, 15).

10. Système propulsif (1), notamment d'aéronef, comprenant au moins deux moteurs électriques (3, 4) montés sur un même arbre de rotation, un organe propulsif (2) entraîné en rotation par lesdits moteurs (3, 4) et un système de commande (10) des moteurs électriques selon la revendication 8 ou 9.

11. Procédé (21) d'équilibrage d'un moteur électrique d'un système propulsif (1), notamment d'aéronef, par au moins un paramètre à équilibrer (P1, P2) comprenant au moins deux moteurs électriques (3, 4) et un organe propulsif (2) entraîné en rotation par lesdits moteurs électriques, comprenant :

- une étape (22) de calcul d'un facteur de correction (F1, F2) d'une consigne de vitesse dépendant dudit paramètre (P1, P2) du moteur électrique associé que l'on cherche à équilibrer, et
- une étape (23) de calcul, pour chacun des moteurs électriques (3, 4) d'une correction de la consigne de vitesse (Corr_Cons_V1, Corr_Cons_V2) en fonction du facteur de correction (F1, F2) calculés et d'une consigne de vitesse (Cons_VH) de l'organe propulsif (2).

**12.** Procédé (21) d'équilibrage selon la revendication 11, dans lequel pour calculer le facteur de correction (F1, F2) de la consigne de vitesse, on calcule un gain d'équilibrage (GN) en fonction d'une valeur maximale (Emax) de l'erreur statique sur la vitesse de l'organe propulsif (2) allouée à l'équilibrage des moteurs électriques, d'une valeur minimale (Emin) de l'erreur statique sur la vitesse de l'organe propulsif (2) allouée à l'équilibrage des moteurs électriques, et des valeurs maximales et minimales (PN(max) ; PN(min)) du paramètre à équilibrer (P).

**13.** Procédé (21) d'équilibrage selon la revendication 11 ou 12, dans lequel on calcule une consigne de compensation (Cons_comp) de la consigne de vitesse (Cons_VH) de l'organe propulsif (2) en fonction du paramètre (P1, P2) à équilibrer du moteur associé ou en fonction d'une valeur estimée (Charge_H) de la charge de l'organe propulsif (2).

**14.** Procédé de commande (20) des moteurs électriques (3, 4) dans lequel on transmet à un module de commande (14, 15) associé à un moteur électrique (3, 4) la consigne de vitesse (Corr_Cons_V1, Corr_Cons_V2) calculée à l'étape (23) de calcul du procédé (21) d'équilibrage selon l'une quelconque des revendications 11 à 13, et on calcule une commande de couple (Cons_C1, Cons_C2) en fonction de la vitesse de rotation (V1, V2) du moteur électrique associé (3, 4) et de ladite consigne de vitesse (Corr_Cons_V1, Corr_Cons_V2).

**Patentansprüche**

**1.** System (11) zum Auswuchten eines Elektromotors eines Antriebssystems (1), insbesondere eines Fluggeräts, durch mindestens einen Parameter (P1, P2), das mindestens zwei Elektromotore (3, 4) und ein Antriebsorgan (2) umfasst, das von den Elektromotoren rotatorisch angetrieben wird, **dadurch gekennzeichnet, dass** das System (11) zum Auswuchten ein Modul zum Auswuchten (12, 13) umfasst, das jedem Elektromotor (3, 4) zugeordnet ist, wobei jedes der Module zum Auswuchten (12, 13) dazu ausgelegt ist, eine Korrektur des Geschwindigkeits-Sollwerts (Corr_Cons_V1, Corr_Cons_V2) in Abhängigkeit von einem Korrekturfaktor (F1, F2) des Geschwindigkeits-Sollwerts zu berechnen, der von dem mindestens einen Parameter (P1, P2) des zugeordneten Elektromotors, der ausgewuchtet werden soll, und von einem Geschwindigkeits-Sollwert (Cons_VH) des Antriebsorgans (2) abhängt.

**2.** System (11) zum Auswuchten nach Anspruch 1, wobei der Korrekturfaktor (F1, F2) des Geschwindigkeits-Sollwerts eine fallende monotone affine Funktion ist, die von einem Auswuchtgain (GN) und von einem vorher festgelegten maximalen Wert (Corr_Cons_Vmax) der Korrektur des Geschwindigkeits-Sollwerts abhängt.

**3.** System (11) zum Auswuchten nach Anspruch 2, wobei der Auswuchtgain (GN) in Abhängigkeit von einem maximalen Wert (Emax) des statistischen Fehlers bei der Geschwindigkeit des Antriebsorgans (2), der dem Auswuchten der Elektromotore eingeräumt wird, von einem minimalen Wert (Emin) des statistischen Fehlers bei der Geschwindigkeit des Antriebsorgans (2), der dem Auswuchten der Elektromotore eingeräumt wird, und von den maximalen und minimalen Werten (PN(max); PN(min)) des auszuwuchtenden Parameters (P) bestimmt wird.

**4.** System (11) zum Auswuchten nach einem der vorangehenden Ansprüche, umfassend ein Modul (16a, 16b) zum Ausgleichen des statistischen Fehlers (E) bei der Geschwindigkeit des Antriebsorgans (2), das dazu ausgelegt ist, einen Sollwert zum Ausgleichen (Cons_comp) des Geschwindigkeits-Sollwerts (Cons_VH) des Antriebsorgans (2) in Abhängigkeit von einem Schätzwert (Charge_H) der Belastung des Antriebsorgans (2) zu berechnen.

**5.** System (11) zum Auswuchten nach einem der Ansprüche 1 bis 4, umfassend ein Modul (17) zum Ausgleichen des statistischen Fehlers (E) bei der Geschwindigkeit des Antriebsorgans (2), das dazu ausgelegt ist, einen Sollwert zum Ausgleichen (Cons_comp) des Geschwindigkeits-Sollwerts (Cons_VH) des Antriebsorgans (2) in Abhängigkeit von dem auszuwuchtenden Parameter (P1, P2) des zugeordneten Motors zu berechnen.

**6.** System (11) zum Auswuchten nach einem der vorangehenden Ansprüche, wobei der auszuwuchtende Parameter (P1, P2) dem elektrischen Strom in dem zugeordneten Elektromotor (3, 4) entspricht.

**7.** System (11) zum Auswuchten nach einem der vorangehenden Ansprüche, umfassend einen jedem Modul zum Auswuchten vorgelagerten Tiefpassfilter, um den Parameter (P1, P2) des zugeordneten Elektromotors zu filtern, der ausgewuchtet werden soll, der in das Modul zum Auswuchten eingespeist wird.

8. Steuersystem (10), umfassend ein System (11) zum Auswuchten nach einem der vorangehenden Ansprüche und ein Steuermodul (14, 15), das einem Elektromotor (3, 4) zugeordnet und dazu ausgelegt ist, einen Drehzahlbefehl (Cons_C1, Cons_C2) zu berechnen und dem zugeordnetem Elektromotor (3, 4) in Abhängigkeit von der Rotationsgeschwindigkeit (V1, V2) des zugeordneten Elektromotors (3, 4) und von dem vom System (11) zum Auswuchten berechneten Geschwindigkeits-Sollwert (Corr_Cons_V1, Corr_Cons_V2) zu übermitteln.

9. Steuersystem (10) nach Anspruch 8, umfassend zwei verschiedene Steuereinheiten (10a, 10b), die jeweils einem Elektromotor (3, 4) zugewiesen sind, wobei jede der Steuereinheiten (10a, 10b) mindestens ein Modul zum Auswuchten (12, 13) und ein Steuermodul (14, 15) umfasst.

10. Antriebssystems (1), insbesondere Luftfahrzeug, umfassend mindestens zwei Elektromotore (3, 4), die auf derselben Rotationswelle angebracht sind, ein Antriebsorgan (2), das von den Motoren (3, 4) rotierend angetrieben wird und ein Steuersystem (10) der Elektromotore nach Anspruch 8 oder 9.

11. Verfahren (21) zum Auswuchten eines Elektromotors eines Antriebssystems (1), insbesondere eines Luftfahrzeugs, durch mindestens einen auszuwuchtenden Parameter (P1, P2), umfassend mindestens zwei Elektromotore (3, 4) und ein Antriebsorgan (2), das von den Elektromotoren rotatorisch angetrieben wird, umfassend:

  - einen Schritt (22) des Berechnens eines Korrekturfaktors (F1, F2) eines Geschwindigkeits-Sollwerts, der von dem Parameter (P1, P2) des zugeordneten Elektromotors, der ausgewuchtet werden soll, abhängt, und
  - einen Schritt (23) des Berechnens, für jeden der Elektromotore (3, 4), einer Korrektur des Geschwindigkeits-Sollwerts (Corr_Cons_V1, Corr_Cons_V2) in Abhängigkeit von dem berechneten Korrekturfaktor (F1, F2) und von einem Geschwindigkeits-Sollwert (Cons_VH) des Antriebsorgans (2).

12. Verfahren (21) zum Auswuchten nach Anspruch 11, wobei zur Berechnung des Korrekturfaktors (F1, F2) des Geschwindigkeits-Sollwerts ein Auswuchtgain (GN) in Abhängigkeit von einem maximalen Wert (Emax) des statistischen Fehlers bei der Geschwindigkeit des Antriebsorgans (2), der dem Auswuchten der Elektromotore eingeräumt wird, von einem minimalen Wert (Emin) des statistischen Fehlers bei der Geschwindigkeit des Antriebsorgans (2), der dem Auswuchten der Elektromotore eingeräumt wird, und von den maximalen und minimalen Werten (PN(max); PN(min)) des auszuwuchtenden Parameters (P) berechnet wird.

13. Verfahren (21) zum Auswuchten nach Anspruch 11 oder 12, wobei ein Sollwert zum Ausgleichen (Cons_comp) des Geschwindigkeits-Sollwerts (Cons_VH) des Antriebsorgans (2) in Abhängigkeit von dem auszuwuchtenden Parameter (P1, P2) des zugeordneten Motors oder in Abhängigkeit von einem Schätzwert (Charge_H) der Belastung des Antriebsorgans (2) berechnet wird.

14. Verfahren zum Steuern (20) der Elektromotore (3, 4), wobei dem Steuermodul (14, 15), das einem Elektromotor (3, 4) zugeordnet ist, der Geschwindigkeits-Sollwert (Corr_Cons_V1, Corr_Cons_V2) übermittelt wird, der im Berechnungsschritt (23) des Verfahrens (21) zum Auswuchten nach einem der Ansprüche 11 bis 13 berechnet wurde, und ein Drehzahlbefehl (Cons_C1, Cons_C2) in Abhängigkeit von der Rotationsgeschwindigkeit (V1, V2) des zugeordneten Elektromotors (3, 4) und des Geschwindigkeits-Sollwerts (Corr_Cons_V1, Corr_Cons_V2) berechnet wird.

**Claims**

1. System (11) for balancing an electric motor of a propulsion system (1), in particular of an aircraft, with at least one parameter (P1, P2) comprising at least two electric motors (3, 4) and a propulsion member (2) driven in rotation by said electric motors, **characterised in that** said balancing system (11) comprises a balancing module (12, 13) associated with each electric motor (3, 4), each of the balancing modules (12, 13) being configured to calculate a correction of the speed setpoint (Corr_Cons_V1, Corr_Cons_V2) as a function of a correction factor (F1, F2) of the speed setpoint dependent on said at least one parameter (P1, P2) of the associated electric motor that is intended to be balanced and a speed setpoint (Cons_VH) of the propulsion member (2).

2. Balancing system (11) according to claim 1, wherein the correction factor (F1, F2) of the speed setpoint is a decreasing monotonic affine function dependent on a balancing gain (GN) and a predetermined maximum speed setpoint correction value (Corr_Cons_Vmax).

3. Balancing system (11) according to claim 2, wherein the balancing gain (GN) is determined as a function of a maximum value (Emax) of the static error on the speed of the propulsion member (2) allocated to balancing the electric motors, a minimum value (Emin) of the static error on the speed of the propulsion member (2) allocated to balancing the electric motors, and maximum and minimum values (PN(max); PN(min)) of the parameter to be balanced (P).

4. Balancing system (11) according to any one of the preceding claims, comprising a module (16a, 16b) for compensating the static error (E) on the speed of the propulsion member (2) configured to calculate a compensation setpoint (Cons_comp) of the speed setpoint (Cons_VH) of the propulsion member (2) as a function of an estimated value (Charge_H) of the load of the propulsion member (2).

5. Balancing system (11) according to any one of claims 1 to 4, comprising a module (17) for compensating the static error (E) on the speed of the propulsion member (2) configured to calculate a compensation setpoint (Cons_comp) of the speed setpoint (Cons_VH) of the propulsion member (2) as a function of the parameter (P1, P2) to be balanced of the associated motor.

6. Balancing system (11) according to any one of the preceding claims, wherein the parameter (P1, P2) to be balanced corresponds to the electric current in the associated electric motor (3, 4).

7. Balancing system (11) according to any one of the preceding claims, comprising a low-pass filter upstream from each balancing module in order to filter the parameter (P1, P2) of the associated electric motor that it is intended to balance entering the balancing module.

8. Control system (10) comprising a balancing system (11) according to any one of the preceding claims and a control module (14, 15) associated with an electric motor (3, 4) and configured to calculate and send a torque command (Cons_C1, Cons_C2) to the associated electric motor (3, 4) as a function of the rotational speed (V1, V2) of the associated electric motor (3, 4) and the speed setpoint (Corr_Cons_V1, Corr_Cons_V2) calculated by the balancing system (11).

9. Control system (10) according to claim 8, comprising two separate control units (10a, 10b), each assigned to an electric motor (3, 4), each of the control units (10a, 10b) comprising at least a balancing module (12, 13) and a control module (14, 15).

10. Propulsion system (1), in particular of an aircraft, comprising at least two electric motors (3, 4) mounted on the same rotary shaft, a propulsion member (2) driven in rotation by said motors (3, 4) and a system (10) for controlling the electric motors according to claim 8 or 9.

11. Method (21) for balancing an electric motor of a propulsion system (1), in particular of an aircraft, with at least one parameter to be balanced (P1, P2) comprising at least two electric motors (3, 4) and a propulsion member (2) driven in rotation by said electric motors, comprising:

- a step (22) of calculating a correction factor (F1, F2) of a speed setpoint dependent on a parameter (P1, P2) of the associated electric motor that is intended to be balanced, and
- a step (23) of calculating, for each of the electric motors (3, 4), a correction of the speed setpoint (Corr_Cons_V1, Corr_Cons_V2) as a function of the correction factor (F1, F2) calculated and a speed setpoint (Cons_VH) of the propulsion member (2).

12. Balancing method (21) according to claim 11, wherein to calculate the correction factor (F1, F2) of the speed setpoint, a balancing gain (GN) is calculated as a function of a maximum value (Emax) of the static error on the speed of the propulsion member (2) allocated to balancing the electric motors, a minimum value (Emin) of the static error on the speed of the propulsion member (2) allocated to balancing the electric motors, and maximum and minimum values (PN(max); PN(min)) of the parameter to be balanced (P).

13. Balancing method (21) according to claim 11 or 12, wherein a compensation setpoint (Cons_comp) of the speed setpoint (Cons_VH) of the propulsion member (2) is calculated as a function of the parameter (P1, P2) to be balanced of the associated motor or as a function of an estimated value (Charge_H) of the load of the propulsion member (2).

14. Control method (20) of the electric motors (3, 4) wherein a control module (14, 15) associated with an electric motors (3, 4) is sent the speed setpoint (Corr_Cons_V1, Corr_Cons_V2) calculated in the step (23) of calculating the balancing method (21) according to any one of claims 11 to 13, and a torque command (Cons_C1, Cons_C2) is calculated as a function of the rotational speed (V1, V2) of the associated electric motor (3, 4) and said speed setpoint (Corr_Cons_V1, Corr_Cons_V2).

EP 4 072 944 B1

[Fig 1]

11

[Fig 2]

[Fig 3]

[Fig 4]

[Fig 5]

**EP 4 072 944 B1**

**RÉFÉRENCES CITÉES DANS LA DESCRIPTION**

**Documents brevets cités dans la description**

- DE 112015003310 T5